Europäisches Patentamt

European Patent Office

Office européen des brevets

(11) Publication number: **0 058 531**
**B1**

(12) **EUROPEAN PATENT SPECIFICATION**

(45) Date of publication of patent specification: **21.11.85**

(51) Int. Cl.⁴: **C 01 C 1/04**

(21) Application number: **82300697.8**

(22) Date of filing: **12.02.82**

(54) Process for the production of ammonia.

(30) Priority: **13.02.81 GB 8104509**
**05.06.81 GB 8117359**

(43) Date of publication of application:
**25.08.82 Bulletin 82/34**

(45) Publication of the grant of the patent:
**21.11.85 Bulletin 85/47**

(84) Designated Contracting States:
**BE DE FR GB IT NL**

(56) References cited:
**GB-A-1 115 952**
**GB-A-1 468 441**
**GB-A-1 565 074**
**GB-A-2 034 293**

(73) Proprietor: **The British Petroleum Company**
**p.l.c.**
**Britannic House Moor Lane**
**London EC2Y 9BU (GB)**

(72) Inventor: **Logan, Martin Raymond**
**The British Petroleum Company p.l.c. Chertsey**
**Road**
**Sunbury-on-Thames Middlesex, TW16 7LN (GB)**
Inventor: **McCarroll, John James**
**The British Petroleum Company p.l.c. Chertsey**
**Road**
**Sunbury-on-Thames Middlesex, TW16 7LN (GB)**
Inventor: **Tennison, Stephen Robert**
**The British Petroleum Company p.l.c. Chertsey**
**Road**
**Sunbury-on-Thames Middlesex, TW16 7LN (GB)**

(74) Representative: **MacLeod, Malcolm et al**
**c/o The British Petroleum Company plc Patents**
**Division Chertsey Road**
**Sunbury-on-Thames Middlesex, TW16 7LN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for the production of ammonia.

With increased pressure on the world's food resources the demand for nitrogen containing fertilisers based on ammonia has grown rapidly in recent years. Current Haber processes using nitrogen and hydrogen as feedstock generally use a potassium promoted iron catalyst, usually with other promoters such as alumina.

The reaction $N_2 + 3H_2 \rightleftharpoons 2NH_3$ is highly exothermic and thus the equilibrium shifts to the right at lower temperatures. However, present day commercial catalysts are not sufficiently active at lower temperatures to enable the reaction to reach equilibrium within the short time the reactants are in contact with the catalyst. Activity increases with temperature and therefore a compromise has to be reached.

Furthermore, these catalysts require the presence of relatively high concentrations of hydrogen in order to retain their activity.

Thus previous processes have been limited to producing a reaction product containing ammonia and considerable quantities of unreacted hydrogen and nitrogen. In the case of commercial processes this has necessitated the provision of recycle facilities which are expensive both in terms of initial capital costs and subsequent operating costs.

Our GB—A—1565074 discloses a process for the production of ammonia from nitrogen and hydrogen utilising a catalyst comprising (i) as support a graphite-containing carbon having (a) a basal plane surface area of at least 100 m²/g, (b) a ratio of BET surface area to basal plane surface area of not more than 8:1, preferably not more than 5:1 and (c) a ratio of basal plane surface area of at least 2:1 and preferably at least 5:1, and (ii) as active component (a) 0.1 to 50%, preferably 1 to 30%, most preferably 5 to 10% by weight of a transition metal of the 4th, 5th and 6th horizontal Periods of Groups V, VI, VII and VIII of the Periodic Table expressed as % by weight of total catalyst and (b) 0.1 to 4 times by weight of (a) of a promoter selected from Groups IA or IIA of the Periodic Table or the lathanides or actinides.

The Periodic Table referred to in the present specification is the Periodic Table published on page 9 of the Classification Key for Patent Specifications, Division C2, Organic Chemistry, published by the Patent Office, London 1977.

We have now discovered that the Group VIII metal catalyst disclosed in GB—A—1565074 is sufficiently active to achieve significant conversion even when the hydrogen is present only in low concentration and thus to produce a reaction product containing ammonia, unreacted nitrogen and little unreacted hydrogen. After product removal, the remaining material can be used as fuel gas or recovered cryogenically if necessary. Expensive recycle facilities are not required.

Thus according to the present invention there is provided a continuous process for the production of ammonia which process comprises passing a feedstock containing hydrogen and nitrogen over a catalyst comprising (i) as support a graphite-containing carbon having (a) a basal plane surface area of at least 100 m²/g, (b) a ratio of BET surface area to basal plane surface area of not more than 5:1, and (c) a ratio of basal plane surface area to edge surface area of at least 5:1, and (ii) as active component (a) 0.1 to 50%, preferably 1 to 30%, most preferably 5 to 10% by weight of a metal of the 4th, 5th and 6th horizontal Periods of Groups V, VI, VII and VIII of the Periodic Table, expressed as % by weight of total catalyst, and (b) 0.1 to 4 times by weight of (a) of a promoter selected from Groups IA or IIA of the Periodic Table, characterised in that from 2 to 5 consecutive reaction zones are employed and at least some product ammonia is removed from the line between each reaction zone and its successor and the resulting mixture, depleted in ammonia, is supplied to the succeeding reaction zone for further conversion to take place, the molar ratio of the hydrogen to nitrogen in the feedstock to the first reaction zone being in the range 2:1 to 0.25:1 and the reaction being carried out until the overall conversion of the hydrogen initially present in the feed is at least 75%, and no hydrogen is recycled to a reaction zone.

The product ammonia in the line between each reaction zone and its successor is preferably liquefied before recovery.

Preferably liquefaction is achieved by heat exchange with the feedstock to that particular reaction zone with additional cooling.

The preferred transition metals are ruthenium and osmium, particularly the former.

Preferred promoters are the alkali metals and barium, particularly rubidium and potassium.

The graphite-containing carbon support may be prepared by the method disclosed in GB—A—1468441 comprising the steps of (1) an initial heat treatment in an inert atmosphere at a temperature between 900°C and 3330°C, (2) an oxidation stage at a temperature between 300°C and 1200°C, and (3) a further heat treatment in an inert atmosphere at a temperature between 1000°C and 3000°C, preferably between 1400°C and 2100°C.

The transition metal component and the promoter may be added by conventional impregnation techniques as disclosed in GB—A—1565074.

Prior to the introduction of the feed to be processed, the catalyst should be activated by heating in a reducing atmosphere, normally the hydrogen/nitrogen process stream.

Broad and preferred ranges of process conditions are as follows:

|  | Broad Range | Preferred Range |
|---|---|---|
| Temperature °C | 200—600 | 250—500 |
| Pressure bars | 30—300 | 60—200 |
| Space velocity v/v/hr | 100—30,000 | 500—10,000 |

The feedstock molar ratio of hydrogen to nitrogen is in the range 2:1 to 0.25:1, preferably about 1:1.

Because of the requirement of previous commercial catalysts for hydrogen and nitrogen in stoichiometric amounts, it was only possible to use steam reforming or partial oxidation processes with a cryogenic unit to supply pure oxygen and nitrogen.

A gas containing a mixture of hydrogen and nitrogen in a ratio in the range 1:1 to 1.4:1 can readily be synthesised by the partial oxidation with air of a wide range of hydrocarbon materials ranging from natural gas to fuel oil and coal, and purified by conventional techniques. This provides a relatively cheap feedstock which could not be used by prior art processes utilising conventional catalysts since the hydrogen and nitrogen are present in the wrong proportions.

The use of the single pass system also permits a larger concentration of inert components such as methane in the feedstock than previously. These must be minimised in conventional systems since they build up rapidly to a high level in the recycle stream.

Furthermore, the feedstock can be obtained from the partial oxidation unit at a pressure which is suitable for ammonia synthesis. The only compression required will then be for the air and feed supplies to the partial oxidation unit.

Residual product can be recovered by washing with a weak aqueous solution of ammonia in the manner described in our GB—A—2034293.

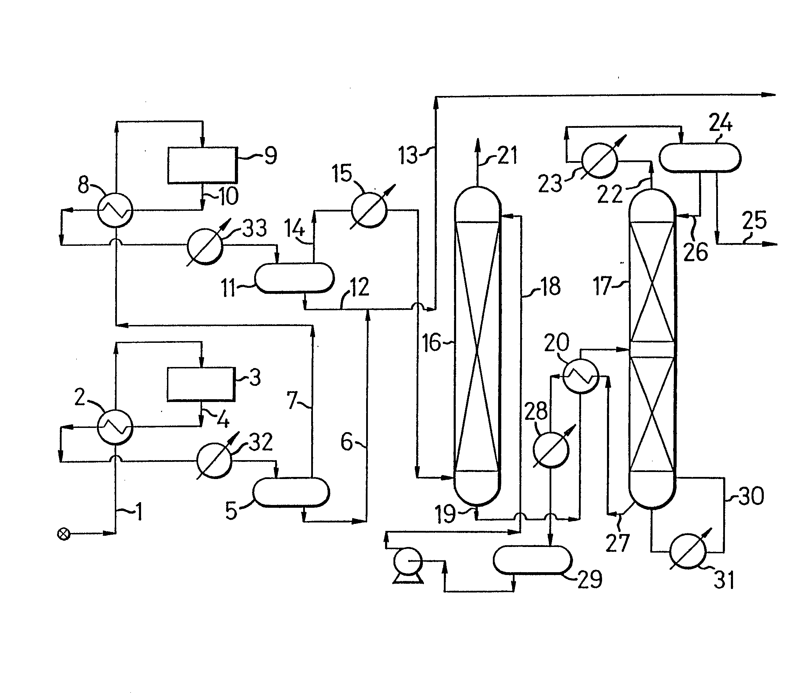

The invention is illustrated with reference to the accompanying drawing which is a simplified process flow diagram.

Feedstock derived from synthesis gas containing nitrogen and hydrogen is fed by line 1 through a heat exchanger 2 to a first bed reactor 3 containing a catalyst. In the reactor 3 the feedstock is partially converted to ammonia. From heat exchanger 2, the intermediate product passes to a cooler/condenser 32 and then to a separator 5 from which liquid ammonia is removed by line 6 and unconverted nitrogen, hydrogen and gaseous ammonia are passed by line 7 through heat exchanger 8 and thence to a second bed reactor 9 similar to the first.

Product from reactor 9 is passed by line 10 through heat exchanger 8 to a cooler/condenser 33 and then to a separator 11 from which liquid ammonia is removed by line 12. Lines 6 and 12 unite to form a further line 13 which removes anhydrous liquid ammonia product.

Further similar beds can be added with similar arrangements for feed and intermediate product offtake.

Unreacted gases together with some gaseous ammonia are removed from the separator 11 by line 14, passed through a cooler/condenser 15 and fed to an ammonia recovery system comprising an absorber 16 and a stripper 17.

In the absorber 16 the gases supplied by line 14 are contacted with the absorbent which is a dilute aqueous solution of ammonia supplied by line 18. Ammonia dissolves in the solution and the resulting concentrated solution of ammonia is removed by line 19, heated in heat exchanger 20 and passed to the stripper 17. The unreacted gases, containing more than 75% nitrogen and traces of other materials, are removed by line 21. The offtake gas may be used to fuel the turbines required for the compressors in the system (not shown, as a general purpose fuel gas component, or the hydrogen may be recovered cryogenically and re-used.

In the stripper 17 the aqueous solution of ammonia is heated and the gaseous ammonia driven off is removed by line 22 and passed to a total condenser 23. The liquid product is collected in a drum 24 from which product is taken by line 25 and a reflux stream returned to the stripper by line 26.

Stripper solvent, i.e. a dilute aqueous solution of ammonia, is withdrawn from the base of the stripper by line 27, passed through the heat exchanger 20 and a further cooler 28 to a surge drum 29 from which it is pumped to the top of the absorber 16 by line 18.

Heat is applied to the stripper 17 by means of a reboiler stream 30 which passes through a steam heated exchanger 31.

The invention is illustrated with reference to the following Example.

Ammonia was prepared from synthesis gas in a plant similar to that disclosed with reference to the drawing with the difference that the plant contained four reactors and ancilliary equipment and not two as shown.

Feedstock analysis, reaction conditions and product yields are given in the following Table.

| STREAM NO. | 1 | 2 | 3 | 4 | 5 | 6 | 7 |
|---|---|---|---|---|---|---|---|
| TITLE | SYNTHESIS GAS | REACTOR NO. 1 EFFLUENT | NH3 RECOVERY REFRIG. | REACTOR NO. 2 FEED | REACTOR NO. 2 EFFLUENT | NH3 RECOVERY REFRIG. | REACTOR NO. 3 FEED |
| TEMP (°C) | 335 | 357 | −33 | 322 | 339 | −33 | 309 |
| PRES (bar) | 69.7 | 68.0 | 67.7 | 67.7 | 66.0 | 65.7 | 65.7 |
| HYDROGEN | 4199 | 2431 | 0.32 | 2431 | 1371 | 0.18 | 1371 |
| METHANE | 45.8 | 45.8 | 0.14 | 45.6 | 45.6 | 0.14 | 45.5 |
| NITROGEN | 2999 | 2410 | 0.36 | 2409 | 0.27 | 2056 |  |
| ARGON | 27.2 | 27.2 | 0.09 | 27.1 | 27.1 | 0.09 | 27.1 |
| AMMONIA | − | 1179 | 1060 | 119 | 825 | 735 | 89.8 |
| TOTAL | 7271 | 6093 | 1061 | 5032 | 4325 | 736 | 3598 |

| STREAM NO. | 8 | 9 | 10 | 11 | 12 | 13 | 14 |
|---|---|---|---|---|---|---|---|
| TITLE | REACTOR NO. 3 EFFLUENT | NH3 RECOVERY REFRIG. | REACTOR NO. 4 FEED | REACTOR NO. 4 EFFLUENT | NH3 RECOVERY WATER WASH | FUEL GAS | TOTAL NH3 RECOVERY |
| TEMP (°C) | 318 | −33 | 298 | 295 | 49 | 49 | − |
| PRES (bar) | 64.0 | 63.7 | 63.7 | 62.1 | 19.6 | 15.1 | − |
| HYDROGEN | 703 | 0.09 | 703 | 391 | − | 391 | − |
| METHANE | 45.5 | 0.09 | 45.4 | 45.4 | − | 45.4 | − |
| NITROGEN | 1834 | 0.23 | 1833 | 1729 | − | 1729 | − |
| ARGON | 27.1 | 0.45 | 27.0 | 27.0 | − | 27.0 | − |
| AMMONIA | 535 | 464 | 71.1 | 280 | 279 | 0.55 | 2538 |
| TOTAL | 3145 | 465 | 2680 | 2472 | 279 | 2193 | 2583 |

Note: All Flowrates in kg mols/h.          1036 tonnes/day Ammonia.

0 058 531

The average gas hourly space velocities of the gases through Reactors 1, 2, 3 and 4 were 3,000, 2,190, 1490 and 2,030, respectively.

The catalyst contained 7% by weight ruthenium and 14% by weight of potassium. It was prepared by impregnating a graphite-containing carbon support with aqueous solutions of ruthenium chloride and potassium nitrate.

The support was prepared by treating that carbon sold by Degussa A. G. under the trade name BKIV by the three stage treatment disclosed in GB—A—1468441 involving heating in an inert atmosphere, oxidation and heating again in an inert atmosphere. It was then acid washed as described in GB—A—2033776.

After the final heat treatment the graphite-containing carbon had the following surface area properties:

| | |
|---|---|
| Basal Plane Surface Area (bpsa) | : 391 $m^2$/g |
| BET Surface Area (BETsa) | : 769 $m^2$/g |
| Edge Surface Area (esa) | : 1.8 $m^2$/g |
| Ratio of BETsa to bpsa | : 1.97 |
| Ratio of bpsa to esa | : 217 |

## Claims

1. A continuous process for the production of ammonia which process comprises passing a feedstock containing hydrogen and nitrogen over a catalyst comprising (1) as support a graphite-containing carbon having (a) a basal plane surface area of at least 100 $m^2$/g, (b) a ratio of BET surface area to basal plane surface area of not more than 5:1 and (c) a ratio of basal plane surface area to edge surface area of at least 5:1, and (2) as active component (a) 0.1 to 50% by weight of a transition metal of the 4th, 5th and 6th horizontal periods of groups V, VI, VII, and VIII of the Periodic Table, expressed as percentage by weight of total catalyst, and (b) 0.1 to 4 times by weight of (a) a promoter selected from groups IA or IIA of the Periodic Table characterised in that from 2 to 5 consecutive reaction zones are employed and at least some product ammonia is removed from the line between each reaction zone and its successor and the resulting mixture, depleted in ammonia, is supplied to the succeeding reaction zone for further conversion to take place, the molar ratio of the hydrogen to nitrogen in the feedstock to the first reaction zone being in the range 2:1 to 0.25:1 and the reaction being carried out until the overall conversion of the hydrogen initially present in the feed is at least 75%, and no hydrogen is recycled to a reaction zone.

2. A process according to claim 1 wherein the feed to the process contains hydrogen and nitrogen in a molar ratio of 1:1 to 1.4:1 and is prepared by the partial oxidation with air of a hydrocarbon material.

3. A process according to either one of claims 1 and 2 wherein the transition metal is ruthenium.

4. A process according to any one of the preceding claims wherein the promoter is rubidium or potassium.

5. A process according to any one of the preceding claims wherein the temperature is in the range 200—600°C, the pressure is in the range 30—300 bar and the space velocity is in the range 100—3000 v/v/hr.

## Patentansprüche

1. Kontinuierliches Verfahren zur Herstellung von Ammoniak, bei dem ein Wasserstoff und Stickstoff enthaltendes Einsatzmaterial über einen Katalysator geleitet wird, der
(1) als Träger graphithaltigen Kohlenstoff mit
(a) einer spezifischen Oberfläche der Basis-Ebene von wenigstens 100 $m^2$/g,
(b) einem Verhältnis der BET-spezifischen Oberfläche zu der spezifischen Oberfläche der Basis-Ebene von nicht mehr als 5:1 und
(c) einem Verhältnis der spezifischen Oberfläche der Basis-Ebene zu der spezifischen Kanten-Oberfläche von wenigstens 5:1 und
(2) als aktive Komponente
(a) 0,1 bis 50 Gew.-% eines Übergangsmetalls der vierten, fünften und sechsten waagerechten Perioden der Gruppen V, VI, VII und VIII des Periodensystems, ausgedrückt als Gew.-% des gesamten Katalysators, und
(b) das 0,1- bis 4fache des Gewichts von (a) eines Beschleunigers ausgewählt aus den Gruppen IA oder IIA des Periodensystems
umfaßt, dadurch gekennzeichnet, daß nacheinander 2 bis 5 Reaktionszonen eingesetzt werden und wenigstens ein Teil des als Produkt gebildeten Ammoniaks von der Linie zwischen jeder Reaktionszone und der auf sie folgenden Reaktionszone entfernt wird und daß das erhaltene, an Ammoniak verarmte Gemisch der folgenden Reaktionszone zugeführt wird, um eine weitere Umwandlung zu bewirken, wobei das Stoffmengenverhältnis ("Molverhältnis") Wasserstoff zu Stickstoff in dem Einsatzmaterial für die erste Reaktionszone im Bereich von 2:1 bis 0,25:1 liegt und die Reaktion durchgeführt wird, bis die Gesamt-Umwandlung des ursprünglich vorhandenen Wasserstoffs wenigstens 75% beträgt, und kein Wasserstoff im Kreislauf in eine Reaktionszone zurückgeführt wird.

2. Verfahren nach Anspruch 1, dadurch gekennzeichnet, daß das Einsatzmaterial für das Verfahren Wasserstoff und Stickstoff in einem Stoffmengenverhältnis 1:1 bis 1,4:1 enthält und durch partielle Oxidation eines Kohlenwasserstoff-Materials mit Luft hergestellt wird.

3. Verfahren nach einem der Ansprüche 1 oder 2, dadurch gekennzeichnet, daß das Übergangsmetall Ruthenium ist.

4. Verfahren nach irgendeinem der vorhergehenden Ansprüche, dadurch gekennzeichnet, daß der Beschleuniger Rubidium oder Kalium ist.

5. Verfahren nach irgendeinem der vorhergehenden Ansprüche, dadurch gekennzeichnet, daß die Temperatur im Bereich von 200°C bis 600°C liegt, der Druck im Bereich von 30 bis 300 bar liegt und die Raumströmungsgeschwindigkeit im Bereich von 100 bis 3000 Vol./Vol. × h liegt.

**Revendications**

1. Un procédé continu pour la préparation d'ammoniac, procédé qui consiste à faire passer une matière d'alimentation contenant de l'hydrogène et de l'azote sur un catalyseur comprenant (1) comme support un carbone contenant du graphite et ayant (a) une surface spécifique de plan de base d'au moins 100 m²/g, (b) un rapport de la surface spécifique BET à la surface spécifique de plan de base non supérieur à 5:1 et c) un rapport de la surface spécifique de plan de base à la surface spécifique d'arête d'au moins 5:1 et (2) comme constituant actif (a) 0,1 à 50% en poids d'un métal de transition des 4ème, 5ème et 6ème périodes horizontales des groups V, VI, VII et VIII de la Classification Périodique, exprimé en pourcentage en poids sur le catalyseur total et (b) 0,1 à 4 fois le poids de (a) d'un activeur choisi dans les groupes IA ou IIA de la Classification Périodique, caractérisé en ce que l'on utilise 2 à 5 zones de réaction consécutives et que l'on retire de la conduite au moins une partie de l'ammoniac obtenu comme produit, entre chaque zone de réaction et la suivante et que l'on amène le mélange obtenu, appauvri en ammoniac, à la zone de réaction suivante afin qu'une conversion supplémentaire s'effectue, le rapport molaire de l'hydrogène à l'azote dans la matière d'alimentation de la première zone de réaction étant dans la gamme 2:1 à 0,25:1 et la réaction étant conduite jusqu'à ce que la conversion globale de l'hydrogène initialement présent dans l'alimentation soit d'au moins 75% et qu'on ne recycle pas l'hydrogène vers une zone de réaction.

2. Un procédé selon la revendication 1, dans lequel l'alimentation du procédé contient de l'hydrogène et de l'azote en un rapport molaire de 1:1 à 1,4:1 et est préparée par l'oxydation partielle d'une matière hydrocarbonée par l'air.

3. Un procédé selon l'une ou l'autre des revendications 1 et 2, dans lequel le métal de transition est le ruthénium.

4. Un procédé selon l'une quelconque des revendications précédentes, dans lequel l'activeur est le rubidium ou le potassium.

5. Un procédé selon l'une quelconque des revendications précédentes, dans lequel la température est dans l'intervalle de 200 à 600°C, la pression est dans la gamme de 30 à 300 bar et le débit relatif est dans la gamme de 100 à 3000 volumes/volume/h.

0 058 531